# EUROPÄISCHE PATENTANMELDUNG

(11) **EP 1 672 605 A1**
(43) Veröffentlichungstag der Anmeldung: **21.06.2006**
(21) Anmeldenummer: 04029511.5
(22) Anmeldetag: 14.12.2004
(51) Int. Cl.: G08B 29/14, C09K 3/30

(54) **Fluidgemisch zur Funktionsprüfung von Rauchmeldern**

(71) Anmelder: Siemens Schweiz AG, 8047 Zürich (CH)
(72) Erfinder: Forster, Martin, Dr., 8645 Jona (CH)

(57) **Zusammenfassung**

Ein Fluidgemisch zur Funktionsprüfung von Rauchmeldern besteht aus einem Treibmittel und mindestens einer Aerosolkomponente, welche dem genannten Treibmittel beigemischt ist. Das Fluidgemisch ist durch eine bei Raumtemperatur und Umgebungsdruck flüssige Mischung gebildet, welche als Treibmittel eine Sprühflüssigkeit enthält. Die Aerosolkomponente besteht aus mindestens einem der Stoffe Sebazinsäure-bis-2-ethyl-hexylester, Sebazinsäure-diester mit diversen Estergruppen, Paraffinöl, Phthalsäure-dibutyl-ester, Phthalsäure-bis-2-ethylhexylester und Triäthylenglykol.

## Beschreibung

Die Erfindung betrifft ein Fluidgemisch zur Funktionsprüfung von Rauchmeldern, bestehend aus einem Treibmittel und mindestens einer Aerosolkomponente, welche dem genannten Treibmittel beigemischt ist.

Rauchmelder werden zur Feststellung von Rauchpartikeln oder Aerosolen, die bei einem Brand entstehen können, eingesetzt. Zu den handelsüblichen Rauchmeldern gehören neben den Ionisationsrauchmeldern insbesondere Streulichtrauchmelder, welche das in einer optischen Messkammer an Rauchpartikeln oder Aerosolen gestreute Licht messen.

Rauchmelder und Rauchmeldersysteme haben meist eine Betriebsdauer von mehreren Jahren und erfordern zur Sicherstellung einer einwandfreien Funktion eine periodische Funktionsprüfung, welche in der Regel dadurch erfolgt, dass die Messkammer mit einem Prüfgas beaufschlagt wird, welches ein Aerosol simuliert. So wurden beispielsweise Treibgase mit hohem Molekulargewicht eingesetzt, die ohne Zusatzsubstanzen ein Aerosol zu simulieren vermochten. Ein Treibgasgemisch mit geeignetem Siedepunkt der Komponenten, zwischen - 20°C und +10°C, zeigte sich als sehr wirksam und für alle Meldertypen anwendbar. Die meist verwendeten Treibgase waren die vollständig halogenierten Kohlenwasserstoffe, die auch die Bedingungen der Unbrennbarkeit und Ungiftigkeit erfüllten. Eines dieser Gasgemische ist in CH-A-501 284 beschrieben.

Nach der im September 1987 beschlossenen Treaty of Montreal ist aber der Einsatz vollständig halogenierter Kohlenwasserstoffe wegen ihrer schädigenden Wirkung auf die Ozonschicht ab 1995 in allen Ländern verboten, und somit sind auch die obengenannten Treibgase nicht mehr verwendbar.

In der EP-A-0443 912 ist ein Gasgemisch beschrieben, welches der Ozonschicht keinen Schaden zufügt und welches einen Anteil Dimethyläther und einen Anteil 1,1,1,2-Tetrafluorethan enthält. Dieses Gemisch erbringt zwar in der Verwendung in Kühlgeräten und als Treibgas gute Resultate, ist aber für die spezielle Verwendung als Prüfgas für Rauchmelder nicht sehr gut geeignet, da es keine Aerosole enthält. Und diese Eigenschaft führt dazu, dass sich durch Abkühlung der Luft Wassertröpfchen bilden können und dadurch eventuell ein Alarm ausgelöst werden kann.

In der EP-B-0 663 432 ist ein Gasgemisch der eingangs genannten Art beschrieben, welches aus 80 bis 60 Gewichtsprozenten 1,1,1,2-Tetrafluorethan und 20 bis 40 Gewichtsprozenten eines druckmindernden Gases besteht, welches aus mindestens einem der Stoffe n-Butan, Isobutan, einer Mischung von Propan/n-Butan, einer Mischung von Propan/Iso-Butan, Dimethyläther (CH₃-O-CH₃), Methylal (CH₃-O-CH₂-CH₃) und Ethylen-Methyläther (CH₃-O-CH-CH₂) besteht. Dieses Gasgemisch enthält eine beigemischte aerosolbildende Komponente, die aus mindestens einem der Stoffe Sebazinsäure-bis-2-ethyl-hexylester, Sebazinsäure-diester mit diversen Estergruppen, Paraffinöl, Phthalsäure-dibutylester, Phthalsäure-bis-2-ethyl-hexylester, Butyloxyäthanol, Triäthylenglykol und Triäthylenglykol-diester besteht und dem Gasgemisch in einem Mischverhätnis von maximal 2 Gewichtsprozenten beigemischt ist.

Das in der genannten EP-B beschriebene Gasgemisch hat sich seit Jahren für die Funktionsprüfung von Rauchmeldern bestens bewährt, enthält aber eine fluorhaltige Substanz, welche vor kurzem in Dänemark verboten worden ist und vermutlich auch in weiteren Ländern verboten werden wird.

Durch die Erfindung soll nun ein Fluidgemisch zur Funktionsprüfung von Rauchmeldern geschaffen werden, welches bei gleich guten Eigenschaften wie das in der EP-B-0 663 432 beschriebene Gasgemisch keine fluorhaltige Substanz enthält.

Diese Aufgabe wird erfindungsgemäss dadurch gelöst, dass das Fluidgemisch durch eine bei Raumtemperatur und Umgebungsdruck flüssige Mischung gebildet ist, welche als Treibmittel eine Sprühflüssigkeit enthält. Vorzugsweise enthält die Sprühflüssigkeit mindestens eine Komponente, die beim Versprühen feine Tröpfchen bildet.

Eine erste bevorzugte Ausführungsform des erfindungsgemässen Fluidgemisches ist dadurch gekennzeichnet, dass die Sprühflüssigkeit zusätzliche Komponenten für die Optimierung der Tröpfchengrösse und/oder die Erhöhung des Siedepunkts enthält.

Gemäss einer zweiten bevorzugten Ausführungsform enthält die mindestens eine Komponente der Sprühflüssigkeit mindestens einen der folgenden Stoffe: Ketone, Acetale, Alkohole, Wasser, Kohlenwasserstoffe und/oder Kombinationen davon, im speziellen Methylal, Formaldehyd-diethyl-acetal, n-Hexan, Hexan-Isomerengemisch, Hexan Isomerengemisch + Methylcyclopentan, Ethanol, Propanol, Isopropanol, Acetaldehyd-diethylacetal, Orthoameisensäure-triethylester, Aceton, Methylacetat.

Eine dritte bevorzugte Ausführungsform des erfindungsgemässen Fluidgemisches ist dadurch gekennzeichnet, dass die mindestens eine Aerosolkomponente aus mindestens einem der Stoffe Sebazinsäure-bis-2-ethyl-hexylester, Sebazinsäure-diester mit diversen Estergruppen, Paraffinöl, Phthalsäure-dibutyl-ester, Phthalsäure-bis-2-ethyl-hexylester und Triäthylenglykol besteht.

Neben der neuen Forderung des Verzichts auf fluorhaltige Substanzen bestanden bisher für Gasgemische zur Funktionsprüfung von Rauchmeldern die Forderungen, dass das Gasgemisch zwischen -10°C und +50°C eine Flüssigkeit und unbrennbar sein, und dass es einen Dampfüberdruck ≤ 11 bar bei +50°C haben muss (Vorschrift für Spraydosen). Da prinzipiell kein Gasgemisch existiert, welches alle diese Forderungen erfüllt, wurde beim erfindungsgemässen Fluidgemisch auf die Unbrennbarkeit verzichtet. Das erfindungsgemässe Fluidgemisch ist eine brennbare Flüssigkeit, die durch einen Zerstäuber versprüht wird, wobei der Druck zum Versprühen der Mischung durch Gasdruck oder eine von Hand oder elektrisch betreibbare kleine Pumpe erzeugt wird.

Im Folgenden wird das erfindungsgemässe Fluidgemisch zur Funktionsprüfung von Rauchmeldern anhand von Ausführungsbeispielen näher beschrieben.

Die wesentliche Bedingung für das Fluidgemisch ist die Schonung der Ozonschicht. Wenn als Fluidgemisch so wie üblich ein Flüssiggas verwendet wird, dann kommen als Treibgase nur chlorlose Gase in Frage, da das Chlor die Ozonschicht bekannterweise abbaut. Ausserdem darf das Fluidgemisch auch keinen nicht vollständig fluorierten Kohlenwasserstoff enthalten, da fluorhaltige Substanzen zumindest in Dänemark verboten sind. Da dadurch die Auswahl der zur Verfügung stehenden möglichen Treibgase stark eingeschränkt ist, wird anstatt eines Treibgases eine Sprühflüssigkeit verwendet.

Das Fluidgemisch ist also eine bei Raumtemperatur und Umgebungsdruck flüssige Mischung, welche eine Sprühflüssigkeit und mindestens eine Aerosolkomponente enthält. Diese Mischung wird als ein Nebel aus feinen Tröpfchen versprüht, die Tröpfchen verdunsten und die Aerosolkomponente bleibt als feines Aerosol zurück, welches den Rauchmelder testet. Der Druck zum Versprühen der Mischung wird durch ein Druckgas oder eine von Hand oder elektrisch betreibbare kleine Pumpe erzeugt.

Die Sprühflüssigkeit enthält mindestens eine Komponente, die beim Versprühen sehr feine Tröpfchen bildet, und kann zur Optimierung der Tröpfchengrösse und/oder zur Erhöhung des Siedepunkts auch noch weitere Komponenten enthalten. Als Komponenten der Sprühflüssigkeit sind einer oder mehrere der folgenden Stoffe vorgesehen: Ketone, Acetale, Alkohole, Wasser, Kohlenwasserstoffe und/oder Kombinationen davon, im speziellen Methylal (= Formaldehyddimethylacetal), Formaldehyd-diethylacetal, n-Hexan, Hexan-Isomerengemisch, Hexan Isomerengemisch + Methylcyclopentan, Ethanol, Propanol, Isopropanol, Acetaldehyd-diethylacetal, Orthoameisensäure-triethylester, Aceton, Methylacetat.

Die mindestens eine Aerosolkomponente des Fluidgemisches enthält mindestens einen der folgenden Stoffe:
- Sebazinsäure-bis-2-ethyl-hexyl-ester
- Sebazinsäure-diester mit diversen Estergruppen
- Paraffinöl
- Phthalsäure-dibutylester
- Phthalsäure-bis-ethyl-hexylester
- Triäthylenglykol
wobei der Gesamtanteil aller Aerosolkomponenten ≤ 3 Gewichtsprozent beträgt. Allgemein ist der Anteil der Aerosolkomponenten ≤ 1 Gewichtsprozent, bei einer bevorzugten Ausführungsform des Fluidgemisches liegt er zwischen 0.01 Gewichtsprozent und 0.5 Gewichtsprozent.

Das Fluidgemisch wird in einen Zerstäuber eingefüllt, der anstatt der üblichen Prüfgasdose in ein Melderprüfgerät des Typs RE6 der Siemens Schweiz AG, Building Technologies Group (früher Cerberus AG) eingesetzt wird. Für den Prüfvorgang wird der Melderprüfer über den Melder geschoben. Durch Andrücken des Melderprüfers an den Melder wird der Zerstäuber betätigt und das Fluidgemisch wird auf den Melder gesprüht, strömt in dessen Messkammer und simuliert so das Vorhandensein von Brandaerosolen.

Praktische Versuche der Funktionsprüfung von lonisationsrauchmeldern und von optischen Rauchmeldern mit dem erfindungsgemässen Fluidgemisch haben zu folgenden Ergebnissen geführt:
- Das neue Fluidgemisch erzeugt ein relativ lang lebiges Aerosol.
- Die Alarmierungszeit hängt wesentlich von der Tröpfchengrösse ab, so dass möglichst kleine Tröpchen erzeugt werden sollen.
- Eine Mischung von Methylal mit n-Hexan im Gewichtsverhältnis 1:0.5 mit 0.2% Aerosolkomponente hat sich als besonders gut geeignet erwiesen.

## Patentansprüche

1. Fluidgemisch zur Funktionsprüfung von Rauchmeldern, bestehend aus einem Treibmittel und mindestens einer Aerosolkomponente, welche dem genannten Treibmittel beigemischt ist, **dadurch gekennzeichnet, dass** das Fluidgemisch durch eine bei Raumtemperatur und Umgebungsdrück flüssige Mischung gebildet ist, welche als Treibmittel eine Sprühflüssigkeit enthält.

2. Fluidgemisch nach Anspruch 1, **dadurch gekennzeichnet, dass** die Sprühflüssigkeit mindestens eine Komponente enthält, welche beim Versprühen feine Tröpfchen bildet.

3. Fluidgemisch nach Anspruch 2, **dadurch gekennzeichnet, dass** die Sprühflüssigkeit zusätzliche Komponenten für die Optimierung der Tröpfchengrösse und/oder die Erhöhung des Siedepunkts enthält.

4. Fluidgemisch nach Anspruch 2 oder 3, **dadurch gekennzeichnet, dass** die mindestens eine Komponente der Sprühflüssigkeit mindestens einen der folgenden Stoffe: Ketone, Acetale, Alkohole, Wasser, Kohlenwasserstoffe und/oder Kombinationen davon, im speziellen Methylal, Formaldehyd-diethyl-acetal, n-Hexan, Hexan-Isomerengemisch, Hexan Isomerengemisch + Methylcyclopentan, Ethanol, Propanol, Isopropanol, Acetaldehyd-diethylacetal, Orthoameisensäure-triethylester, Aceton, Methylacetat enthält.

5. Fluidgemisch nach einem der Ansprüche 1 bis 4, **dadurch gekennzeichnet, dass** die mindestens eine Aerosolkomponente aus mindestens einem der Stoffe Sebazinsäure-bis-2-ethyl-hexylester, Sebazinsäure-diester mit diversen Estergruppen, Paraffinöl, Phthalsäure-dibutyl-ester, Phthalsäure-bis-2-ethyl-hexylester und Triäthylen-glykol besteht.

6. Fluidgemisch nach Anspruch 5, **dadurch gekennzeichnet, dass** der Anteil aller Aerosolkomponenten nicht grösser ist als 3 Gewichtsprozent.

7. Fluidgemisch nach Anspruch 6, **dadurch gekennzeichnet, dass** der Anteil aller Aerosolkomponenten nicht grösser ist als 1 Gewichtsprozent und vorzugsweise zwischen 0.01 Gewichtsprozent und 0.5 Gewichtsprozent liegt.

8. Fluidgemisch nach einem der Ansprüche 1 bis 6, **gekennzeichnet durch** eine Mischung von Methylal mit n-Hexan im Gewichtsverhältnis von 1:0.5 mit einer Aerosolkomponente von 0.2 Gewichtsprozent.
